# EUROPÄISCHE PATENTSCHRIFT

(11) **EP 4 115 099 B1**
(45) Veröffentlichungstag und Bekanntmachung des Hinweises auf die Patenterteilung: **31.01.2024**
(21) Anmeldenummer: 21704748.9
(22) Anmeldetag: 09.02.2021
(51) Int. Cl.: F16H 63/34

(54) **PARKSPERRENEINRICHTUNG FÜR EIN FAHRZEUGGETRIEBE UND VERFAHREN ZUM BETREIBEN EINER PARKSPERRENEINRICHTUNG**
PARKING BRAKE DEVICE FOR A VEHICLE TRANSMISSION AND METHOD FOR OPERATING A PARKING BRAKE DEVICE
DISPOSITIF DE FREIN DE STATIONNEMENT POUR TRANSMISSION DE VÉHICULE ET PROCÉDÉ DE FONCTIONNEMENT D'UN DISPOSITIF DE FREIN DE STATIONNEMENT

(30) Priorität: 03.03.2020 DE 102020202682
(43) Veröffentlichungstag der Anmeldung: 11.01.2023
(73) Patentinhaber: Robert Bosch GmbH, 70442 Stuttgart (DE)
(72) Erfinder: WETZEL, Gerhard, 70825 Korntal-Muenchingen (DE)
(86) Internationale Anmeldenummer: PCT/EP2021/053075
(87) Internationale Veröffentlichungsnummer: WO 2021/175541

(56) Entgegenhaltungen:
- EP-A1- 2 916 045
- DE-A1- 10 045 953
- DE-A1- 10 054 977

## Beschreibung

Die vorliegende Erfindung betrifft eine Parksperreneinrichtung für ein Fahrzeuggetriebe und ein Verfahren zum Betreiben einer Parksperreneinrichtung.

### Stand der Technik

Bekannte Parksperren können in Getrieben, beispielsweise in Automatikgetrieben, eingesetzt werden um die Gefahr eines ungewollten Wegrollens des Fahrzeugs zu verringern oder zu vermeiden. Derartige Parksperren können hydraulisch aktuiert werden, da solche Getriebe meist eine hydraulische Druckversorgung haben können. Da bei elektrischen Antriebseinheiten in der Regel keine hydraulische Druckversorgung zur Verfügung steht, kann eine möglichst verlustfreie elektromechanische Aktuierung bevorzugt werden. Die Funktion der Parksperre sollte eine hohe Funktionssicherheit aufweisen, wofür auch eine redundante Aktuierung wünschenswert ist. Zusätzlich kann eine dazu gebotene Sicherheit noch erhöht werden, in dem eine redundante Aktuierung mit einer separaten Energieversorgung, etwa durch aufgeladene Kondensatoren, erfolgen kann.

In bekannten rotatorisch wirkenden Parksperren kann durch Drehen der Achse über eine Spiralfeder die Kraft auf die Nockenscheibe übertragen werden. Falls dabei ein Zahn der Parksperrenklinke auf einen Zahn des Parksperrenrads trifft, kann die Spiralfeder gespannt werden und so kann nach einer minimalen Drehung des Parksperrenrades, etwa nach Bewegung des Fahrzeugs, die Klinke eingelegt werden.

In der DE 10 2014 211 390 A1 wird eine Parksperre beschrieben, welche einen Elektromotor und einen Hubmagnet als redundante Aktoren aufweisen kann.

Dabei kann der Hubmagnet als reiner Notaktor vorgesehen sein. Weitere Parksperreinrichtungen sind aus der EP2916045, der DE10045953 und der DE10054977 bekannt.

### Offenbarung der Erfindung

Die vorliegende Erfindung schafft eine Parksperreneinrichtung für ein Fahrzeuggetriebe nach Anspruch 1 und ein Verfahren zum Betreiben einer Parksperreneinrichtung nach Anspruch 9.

Bevorzugte Weiterbildungen sind Gegenstand der Unteransprüche.

### Vorteile der Erfindung

Die der vorliegenden Erfindung zugrunde liegende Idee besteht darin, eine Parksperreneinrichtung für ein Fahrzeuggetriebe sowie ein Verfahren zum Betreiben einer Parksperreneinrichtung anzugeben, bei welchem eine elektromechanische Betätigung dieser erfolgen kann. Die Parksperreneinrichtung kann als kompakte und einfach montierbare Baugruppe ausgestaltet werden. Durch ein Wirken beider Aktoren kann im Betrieb automatisch eine Funktionsprüfung der Aktoren und der Drehmechanik erfolgen und ein erster Aktor auch die Rolle des zweiten Aktors zum Auslösen der Einlegung der Sperrwirkung(position) übernehmen, falls letzterer eine Fehlfunktion aufweist. Des Weiteren können die Drehposition sowie die daraus resultierende Sperrposition oder Neutralposition und etwaige Zwischenpositionen einfach durch einen Sensor erkannt werden.

Erfindungsgemäß umfasst die Parksperreneinrichtung für ein Fahrzeuggetriebe eine Antriebswelle und einen ersten Aktor, durch welchen die Antriebswelle drehbar ist; eine Sperrklinke, welche sperrend in das Fahrzeuggetriebe einrastbar ist; eine Drehmechanik, welche mit der Antriebswelle verbunden ist und einen Rastmechanismus, eine Einlegefeder und einen Permanentmagnet umfasst, wobei die Sperrklinke und die Drehmechanik mit dem Permanentmagnet zwischen einer Sperrposition und einer Neutralposition für das Fahrzeuggetriebe bewegbar sind, wobei die Drehmechanik über die Einlegefeder vorspannbar ist und dadurch die Neutralposition einnehmbar ist; wobei die Parksperreneinrichtung weiterhin einen zweiten Aktor umfasst, durch welchen bei vorgespannter Einlegefeder der Rastmechanismus auslösbar ist und dadurch die Sperrposition durch eine Kraftwirkung der Einlegefeder auf die Drehmechanik einlegbar ist, wobei durch den eingelegten Rastmechanismus bei vorgespannter Einlegefeder die Drehmechanik in der Neutralposition haltbar ist, und wobei der erste Aktor weiterhin dazu eingerichtet ist, vorzugsweise bis zum Erreichen der Ausgangsposition unter Beibehalten der Sperrposition, die Drehmechanik zu bewegen und dadurch die Einlegefeder wieder zu spannen und danach die Drehmechanik in die Neutralposition zu bewegen. Die Parksperreneinrichtung umfasst weiterhin einen Positionssensor, welcher in einem Erfassungsbereich des Permanentmagneten angeordnet ist, wobei der Positionssensor dazu eingerichtet ist, eine Bewegung des Permanentmagneten relativ zum Positionssensor zu ermitteln und zu erfassen ob sich durch die Drehmechanik die Sperrklinke in der Sperrposition oder in der Neutralposition befindet; und eine Steuereinrichtung, welche mit dem Positionssensor und mit dem ersten Aktor und mit dem zweiten Aktor verbunden ist, und welche dazu eingerichtet ist, einen Betrieb des ersten Aktors und/oder des zweiten Aktors zu steuern.

Durch die beiden Aktoren wird die Parksperreneinrichtung vorteilhaft elektromechanisch betätigt.

Die Sperrklinke kann mit einer Klinkenfeder vorgespannt sein, wobei die Klinkenfeder ein permanentes Moment auf die Sperrklinke ausüben kann und die Sperrklinke stets von einer Zahnradmechanik des Fahrzeuggetriebes heraus- oder wegdrücken kann. Um die Sperrwirkung zu erzielen, muss dazu das Moment der Klinkenfeder überwunden werden und diesem entgegengewirkt werden, vorzugsweise durch eine Nockenscheibe der Drehmechanik, welche einen Auslegearm aufweisen kann, welcher an die Sperrklinke anliegen kann und, je nach Drehposition der Drehmechanik, die Sperrklinke in Richtung der Zahnradmechanik des Fahrzeuggetriebes drücken kann und dabei das Moment der Klinkenfeder überwinden kann oder eine Bewegung der Sperrklinke aus der Zahnradmechanik heraus zulassen kann.

Der Rastmechanismus kann beispielsweise eine Einrastklinke umfassen, welche mit einer bestimmten Scheibe oder Element der Drehmechanik verbunden sein kann und an dieser zumindest für eine Rastbewegung beweglich angeordnet sein kann. Diese Einrastklinke kann in bestimmten Positionen mit einer anderen Scheibe oder einem anderen Element der Drehmechanik einrasten und zumindest diese beiden Scheiben oder Elemente bewegungsfest miteinander in Eingriff halten, innerhalb eines gewissen Toleranzbereichs oder mit einem zulässigen Spiel. Auf diese Weise können Teile der Drehmechanik, etwa Scheiben oder andere Elemente, mit einer Einlegefeder verbunden sein und bei vorgespannter Feder im oben genannten Sinne bewegungsfest miteinander verbunden sein bis der Rastmechanismus gelöst wird und die Spannkraft der Einlegefeder ein Bewegen der Drehmechanik auslöst, wodurch etwa eine Nockenscheibe die Sperrklinke bewegen kann. Der Rastmechanismus kann somit selbst auch über die Scheibe drehbar bezüglich der Antriebswelle gelagert sein.

Die eingelegte Parksperre kann somit vorteilhaft einen sicheren Zustand des Fahrzeugs darstellen, da somit ein unbeabsichtigtes Wegrollen des Fahrzeugs, etwa in einer Hanglage mit einem hohen Wahrscheinlichkeitsgrad, verringert oder vermieden werden kann.

Für ein erneutes Spannen der Einlegefeder kann der erste Aktor dienen und beispielsweise jene Scheibe, an welcher der Rastmechanismus befestigt ist, mittels der Bewegung der Antriebswelle in eine Spannrichtung der Einlegefeder drehen.

Der Positionssensor kann an einem Gehäuse des Fahrzeuggetriebes und den beweglichen Elementen der Drehmechanik gegenüberliegend, angeordnet sein, so dass durch diesen ein Magnetfeld eines Permanentmagneten, etwa eines Stabmagneten, in dessen Veränderung erfassbar ist.

Die Drehmechanik kann so aufgebaut sein, dass alle beweglichen Teile auf der Antriebswelle des ersten Aktors angeordnet sein können. Dadurch kann eine kompakte und einfach zu montierende Baugruppe erstellt werden.

Das Rückdrehen der Drehmechanik in die Ausgangsposition, in welcher die Sperrwirkung wieder aufgehoben werden kann, kann vorteilhaft unter bestehender Sperrwirkung erfolgen und vorteilhaft direkt nachdem Spannen der Einlegefeder erfolgen. Unter dem gegen ein Wegrollen fixierten Fahrzeug kann somit der Auslegevorgang der Sperre schnell erfolgen.

Die Anordnung der beweglichen Teile der Drehmechanik auf der Antriebswelle ergeben vorteilhaft eine kompakte Einheit der Parksperreneinrichtung, die Möglichkeit eine vormontierte Baugruppe darzustellen und/oder ein kostengünstiges Design zu realisieren.

Gemäß einer bevorzugten Ausführungsform der Parksperreneinrichtung die Drehmechanik weiterhin eine Klinkenscheibe umfasst, welche drehfest mit der Antriebswelle verbunden ist. Gemäß dieser bevorzugten Ausführungsform umfasst die Parksperreneinrichtung eine Magnetscheibe mit dem Permanentmagnet, eine Einlegefederscheibe, welche mit der Einlegefeder verbunden ist, und eine Nockenscheibe, wobei die Magnetscheibe, die Einlegefederscheibe und die Nockenscheibe drehbar auf der Antriebswelle angeordnet und gelagert sind, wobei die Magnetscheibe, die Einlegefederscheibe, die Nockenscheibe und/oder die Klinkenscheibe Anschlagsbereiche umfassen, über welche ein Drehmoment über die Drehmechanik übertragbar ist, wobei die Sperrklinke an die Nockenscheibe anliegt und abhängig von einer Position der Nockenscheibe die Sperrklinke sich in der Sperrposition oder in der Neutralposition für das Fahrzeuggetriebe befindet.

Der Rastmechanismus kann beispielsweise an der Klinkenscheibe befestigt sein, vorteilhaft für ein Ein- und Ausrasten drehbar und sich mit dieser um die Antriebswelle mitbewegen.

Die Anschlagsbereiche können derart an den genannten Scheiben angeordnet oder Teil dieser sein, so dass die Scheiben relativ zueinander solange gedreht werden können, bis eine jeweilige Scheibe an einen der Anschläge anschlägt und ein Drehmoment auf eine weitere der Scheiben überträgt und diese mitdreht.

Gemäß einer bevorzugten Ausführungsform der Parksperreneinrichtung umfasst die Drehmechanik eine Nockenfeder, über welche das Drehmoment innerhalb der Drehmechanik übertragbar ist.

Die Nockenfeder kann durch eine Scheibenbewegung gespannt werden und für eine Rückbewegung in eine Ausgangsposition der Scheiben relativ zueinander genutzt werden. Die Nockenfeder kann als ein zusätzliches Element zur Übertragung von Drehmomenten innerhalb der Drehmechanik und gegenüber einem Getriebegehäuse und/oder der Sperrklinke genutzt werden.

Gemäß einer bevorzugten Ausführungsform der Parksperreneinrichtung ist der Positionssensor dazu eingerichtet, eine Magnetfeldkennlinie während der Bewegung des Permanentmagneten zu erfassen.

Der Positionssensor kann in einer üblichen Weise ausgelegt sein, welche die Zustände "Parksperre eingelegt" und "Parksperre ausgelegt" sensieren kann. Ein derartiger Sensor kann hierbei auch dazu genutzt werden die Position aus der Kennlinie heraus zu sensieren, und so auch zu erkennen, wenn sich der Permanentmagnet an einer Überspannposition oder vollständigen Spannposition der Einlegefeder befindet, welche sich von der Position der "Parksperre eingelegt" oder "Parksperre ausgelegt" unterscheiden kann oder diese in Teilbereiche unterteilen kann. Durch die Nutzung eines einzigen Sensors, kann ein Aufwand, sowie Bauraum und Kosten reduziert werden und eine Funktionssicherheit erhöht werden.

Gemäß einer bevorzugten Ausführungsform der Parksperreneinrichtung umfasst der erste Aktor einen Elektromotor und der zweite Aktor einen Hubmagnet.

Gemäß einer bevorzugten Ausführungsform der Parksperreneinrichtung ist die Drehmechanik dazu ausgelegt, mit zumindest einem weiteren Anschlagsbereich eines Gehäuses des Fahrzeuggetriebes einzugreifen um ein Drehmoment über die Drehmechanik zu übertragen.

Gemäß einer bevorzugten Ausführungsform der Parksperreneinrichtung ist die Steuereinrichtung dazu eingerichtet, eine Fehlerfunktion des zweiten Aktors zu erkennen und den ersten Aktor zum Auslösen des Rastmechanismus oder den ersten Aktor zum Drehen der Antriebswelle und damit zum Einlegen der Sperrposition anzusteuern.

Der zweite Aktor kann als Hubmagnet ausgebildet sein, der einen Ankerhub umfassen kann und damit die Verrastung des Rastmechanismus auslösen kann. Diese Verrastung kann dann die Einlegefeder freigeben, welche das Einlegen der Parksperre im Normalbetrieb und bei einer Fehlfunktion des zweiten Aktors ermöglichen kann, etwa wenn der Rastmechanismus durch den ersten Aktor ausgelöst wird. Da der
erste Aktor nach dem Einlegen der Parksperre wieder die Einlegefeder spannen kann, kann dadurch eine Funktionsprüfung beider Aktoren im Normalbetrieb gegeben sein.

Eine Testroutine, die ab und zu die Funktion des zweiten Aktors prüfen soll, kann dadurch vermieden werden. Durch diese automatische Funktionsprüfung kann das Verhalten der Parksperre im Normalbetrieb und im Testbetrieb für den Fahrer des Fahrzeugs oder für andere Nutzer stets einen gleichen Eindruck hinterlassen. Wäre hingegen dieses durch eine extra ablaufende Testroutine mit anderen Aktoren unterschiedlich wahrnehmbar, könnte ein Benutzer (Fahrer) veranlasst sein, eine Fehlfunktion zu vermuten und unnötiger Weise eine Werkstatt aufzusuchen.

Eine Fehlfunktion des zweiten Aktors kann vorteilhaft dadurch erkannt werden, dass der Rastmechanismus und das Einlegen der Sperrwirkung nicht innerhalb einer vorgegebenen Zeit gelöst wird, nachdem ein Befehl zum Einlegen der Sperrwirkung von einem Nutzer oder automatisch von der Steuereinrichtung gegeben wurde. Die Steuereinrichtung kann einen solchen Auslösebefehl auf Wunsch eines Nutzers oder automatisch geben, etwa wenn weitere Sensoren eine Notwendigkeit dafür aufzeigen, etwa bei Beginn eines ungewollten Abwärtsrollens des Fahrzeugs. Bei einer Fehlfunktion des zweiten Aktors kann es sich beispielsweise um einen Bruch der elektrischen Kontaktierung, um Kabelbruch, um einen Kurzschluss zur Masse, um einen Windungskurzschluß, oder um Weiteres handeln. Dadurch, dass bei Ausfall des zweiten Aktors auch der erste Aktor die Drehmechanik in die Sperrposition mit entspannter Einlegefeder drehen kann, ist vorteilhaft eine Redundanz für das Einlegen der Parksperre gegeben.

Die Funktionsprüfung kann vorteilhaft bereits dadurch erfolgen, dass feststellbar ist, ob sich innerhalb einer vorbestimmten Zeitspanne, nachdem ein Befehl zum Einlegen oder Auslegen der Sperrwirkung und/oder Vorspannen der Feder gegeben worden ist, diese Wirkung auch eingestellt hat.

Bei üblichen Parksperren ist zur Anwendung unterschiedlicher Aktoren meist eine separate oder keine Funktionsprüfung vorgesehen, somit kann sich die Handhabe einer solchen Parksperre komplizierter gestalten oder diese nur teilweise funktionieren, ohne dass eine Information über eine Funktionsweise erkennbar ist.

Der erste Aktor kann zum Einlegen der Sperrwirkung die Drehmechanik, beispielsweise die Klinkenscheibe, drehen, wodurch sich die Einlegefeder ebenso entspannen kann wie beim Auslösen des Rastmechanismus durch den zweiten Aktor. Der Zustand der Drehmechanik nach diesem Schritt des ersten Aktors als redundanter Auslösemechanismus kann vorteilhaft in der Endposition der Scheiben jenem entsprechen, als ob der zweite Aktor ordnungsgemäß die Einlegefeder freigegeben hätte.

Gemäß einer bevorzugten Ausführungsform der Parksperreneinrichtung ist die Drehmechanik derart ausgelegt, dass beim Bewegen der Drehmechanik zum erneuten Spannen der Einlegefeder und einem nachträglichen Bewegen der Drehmechanik in die Neutralposition die Sperrklinke bis zum Erreichen der Neutralposition eine Sperrwirkung aufrechterhält.

Gemäß einer bevorzugten Ausführungsform der Parksperreneinrichtung umfasst diese eine Notstromversorgung, mit welcher der erste Aktor und/oder der zweite Aktor verbunden ist.

Der zweite Aktor kann sowohl über die normale Bordnetzversorgung bestrombar sein, als auch über eine Notfallversorgung. Eine derartige Notfallversorgung als Notstromversorgung im Fahrzeug kann beispielsweise über eine zweite Batterie oder über Supercaps (Superkondensatoren) dargestellt werden, die bei Ausfall des normalen Bordnetzes sicherstellen können, dass das Fahrzeug in einen sicheren Zustand überführt werden kann, wenn die Sperrwirkung einsetzt. Dies kann einer redundanten Energieversorgung entsprechen.

Erfindungsgemäß erfolgt bei dem Verfahren zum Betreiben einer erfindungsgemäßen Parksperreneinrichtung ein Auslösen des Rastmechanismus durch den zweiten Aktor und dadurch Einlegen der Sperrposition durch eine Kraftwirkung der Einlegefeder oder Drehen der Antriebswelle durch den ersten Aktor und dadurch Einlegen der Sperrposition durch den ersten Aktor bei einer Fehlfunktion des zweiten Aktors, wobei sich bei einer solchen Bewegung die Einlegefeder auch entspannt. Des Weiteren erfolgt danach ein erneutes Spannen der Einlegefeder durch ein Drehen der Drehmechanik durch den ersten Aktor während der Sperrposition und ein Einrasten des Rastmechanismus; und ein Bewegen der Drehmechanik zurück in die Neutralposition durch den ersten Aktor, wobei der Positionssensor, vorzugsweise ständig, eine Bewegung des Permanentmagneten relativ zum Positionssensor ermittelt und erfasst, ob sich durch die Drehmechanik die Sperrklinke in der Sperrposition oder in der Neutralposition befindet.

Gemäß einer bevorzugten Ausführungsform des Verfahrens bewegt der zweite Aktor einen Hub und löst damit den Rastmechanismus und gibt dadurch ein Drehen der Drehmechanik durch die Kraftwirkung der vorgespannten Einlegefeder (16) frei und legt dadurch die Sperrposition ein.

Gemäß einer bevorzugten Ausführungsform des Verfahrens wird zum Spannen der Einlegefeder die Drehmechanik bis zu einer Spannposition gedreht, welche von dem Positionssensor erkannt wird.

Das Verfahren kann sich vorteilhaft auch durch die in Verbindung mit der Parksperreneinrichtung genannten Merkmale auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
- Fig. 1: eine schematische Darstellung einer Drehmechanik in einer Parksperreneinrichtung gemäß einem Ausführungsbeispiel der vorliegenden Erfindung während eines Betriebsschrittes;
- Fig. 2: eine schematische Darstellung einer Drehmechanik in einer Parksperreneinrichtung gemäß einem Ausführungsbeispiel der vorliegenden Erfindung während eines weiteren Betriebsschrittes;
- Fig. 3: eine schematische Darstellung einer Drehmechanik in einer Parksperreneinrichtung gemäß einem Ausführungsbeispiel der vorliegenden Erfindung während eines weiteren Betriebsschrittes;
- Fig. 4: eine schematische Darstellung einer Drehmechanik in einer Parksperreneinrichtung gemäß einem Ausführungsbeispiel der vorliegenden Erfindung während eines weiteren Betriebsschrittes;
- Fig. 5: eine schematische Darstellung einer Drehmechanik in einer Parksperreneinrichtung gemäß einem Ausführungsbeispiel der vorliegenden Erfindung während eines weiteren Betriebsschrittes;
- Fig. 6: eine schematische Darstellung einer Drehmechanik in einer Parksperreneinrichtung gemäß einem Ausführungsbeispiel der vorliegenden Erfindung während eines weiteren Betriebsschrittes;
- Fig. 7: eine schematische Darstellung einer Drehmechanik in einer Parksperreneinrichtung gemäß einem Ausführungsbeispiel der vorliegenden Erfindung während eines weiteren Betriebsschrittes;
- Fig. 8: eine schematische Darstellung einer Drehmechanik in einer Parksperreneinrichtung gemäß einem Ausführungsbeispiel der vorliegenden Erfindung während eines weiteren Betriebsschrittes;
- Fig. 9: eine schematische Darstellung einer Drehmechanik in einer Parksperreneinrichtung gemäß einem Ausführungsbeispiel der vorliegenden Erfindung während eines weiteren Betriebsschrittes; und
- Fig. 10: eine schematische Darstellung einer Drehmechanik in einer Parksperreneinrichtung gemäß einem Ausführungsbeispiel der vorliegenden Erfindung während eines weiteren Betriebsschrittes;

In den Figuren bezeichnen gleiche Bezugszeichen gleiche bzw. funktionsgleiche Elemente.

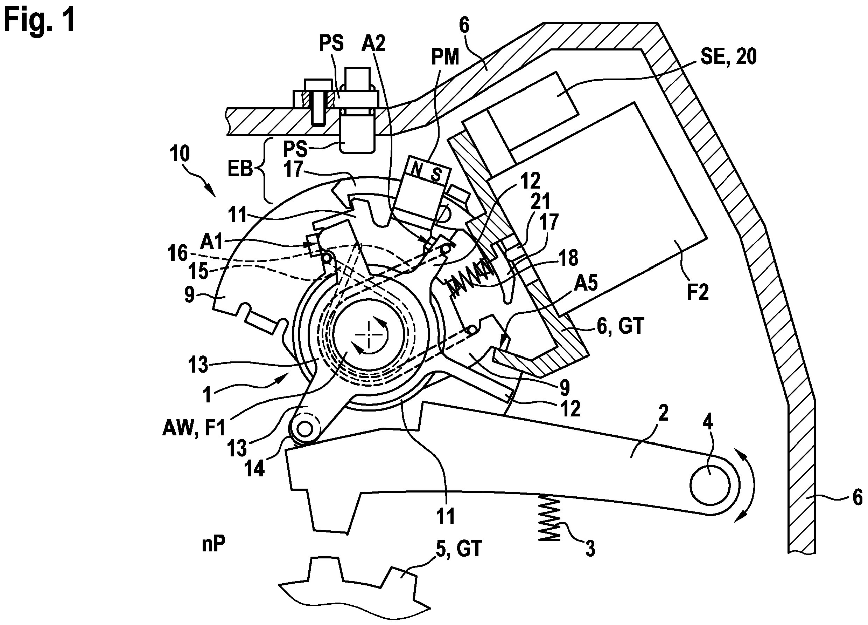

Fig. 1 zeigt eine schematische Darstellung einer Drehmechanik in einer Parksperreneinrichtung gemäß einem Ausführungsbeispiel der vorliegenden Erfindung während eines Betriebsschrittes.

Die Parksperreneinrichtung 10 für ein Fahrzeuggetriebe GT umfasst eine Antriebswelle AW und einen ersten Aktor F1, durch welchen die Antriebswelle AW drehbar ist; eine Sperrklinke 2, welche sperrend in das Fahrzeuggetriebe GT einrastbar ist; eine Drehmechanik 1, welche mit der Antriebswelle AW verbunden ist und einen Rastmechanismus, eine Einlegefeder 16 und einen Permanentmagnet PM umfasst, wobei die Sperrklinke 2 und die Drehmechanik 1 mit dem Permanentmagnet PM zwischen einer Sperrposition (nicht gezeigt) und einer Neutralposition nP für das Fahrzeuggetriebe GT bewegbar ist, wobei die Drehmechanik 1 über die Einlegefeder 16 vorspannbar ist und dabei die Neutralposition nP einnehmbar ist. In der Fig. 1 befindet sich die Drehmechanik 1 und die Sperrklinke 2 in der Neutralposition nP, es ist keine Sperrwirkung aktiv, diese also inaktiv.

Die Sperrklinke 2 kann mit einer Klinkenfeder 3 vorgespannt sein und auf einem Bolzen 4 drehbar gelagert sein und einem Abschnitt eines Parksperrenrades 5 in einem Getriebegehäuse 6 zugewandt sein. Im Getriebegehäuse 6 kann vorteilhaft auch der Positionssensor PS in einem Erfassungsbereich EB zum Bewegungsbereich des Permanentmagneten PM hin angebracht sein, welcher den Zustand der Parksperrenmechanik als "eingelegt P", oder "ausgelegt nP" erfassen kann.

Der zweite Aktor F2, durch welchen bei vorgespannter Einlegefeder 16 der Rastmechanismus auslösbar ist und dadurch die Sperrposition P durch eine Kraftwirkung der Einlegefeder 16 auf die Drehmechanik 1 einlegbar ist, kann einen Hubmagnet zum Auslösen des Rastmechanismus mit dessen Rastklinke 17 umfassen. Dazu kann der Hubmagnet des zweiten Aktors F2 einen Ankerpin 21 umfassen und bewegen, welcher der Wirkung einer Rastfeder 18, welche die Rastklinke 17 zum Einrasten drücken kann, entgegenwirken kann und den Rastmechanismus aus einer Verankerung lösen kann.

Eine Steuereinrichtung SE ist vorteilhaft vorhanden, welche mit dem Positionssensor PS und mit dem ersten Aktor F1 und mit dem zweiten Aktor F2 verbunden ist, und welche dazu eingerichtet ist, einen Betrieb des ersten Aktors F1 und/oder des zweiten Aktors F2 zu steuern, vorteilhaft in Abhängigkeit eines Befehls von einem Nutzer.

Die Drehmechanik 1 kann im Wesentlichen aus vier Scheiben bestehen, wobei die Klinkenscheibe 9 fest mit der Antriebswelle AW verbunden sein kann, die anderen Scheiben als Magnetscheibe 11, Einlegefederscheibe 12, und Nockenscheibe 13 können drehbar auf der Antriebswelle AW gelagert sein. Die Nockenscheibe 13 kann zur Minimierung der Reibung mit einer Rolle 14 ausgeführt werden, welche auf der Sperrklinke 2 beweglich angeordnet sein kann. Die Rolle 14 kann dabei auf einem Arm der Nockenscheibe 13 angeordnet sein, welcher je nach Stellung der Nockenscheibe 13 die Sperrklinke 2 gegen eine Kraftrichtung der Klinkenfeder 3 drücken kann. Der Erste Aktor F1 ist etwa ein Elektromotor und nur symbolisch durch eine Pfeildarstellung gezeigt und kann drehfest mit der Antriebswelle AW verbunden sein.

Zwischen der Nockenscheibe 13 und der Magnetscheibe11 kann die Nockenfeder 15 zum Erzeugen einer Vorspannung eingebaut und befestigt sein, etwa durch Bolzen an den jeweiligen Scheiben, und um die Antriebsachse herumgelegt, dass die beiden Nockenscheibe 13 und die Magnetscheibe 11 an einem ersten Anschlag A1 aufeinander abstützen können, also eine Kraftwirkung aufeinander zu erzeugen können, unter angelegter und somit gespannter Nockenfeder. Ein Auslenken der beiden Scheiben, so dass deren Berührung sich vom ersten Anschlag A1 entfernen würde, könnte die Nockenfeder weiter spannen und die Kraftwirkung aufeinander zu wieder erhöhen. Der erste Anschlag A1 kann etwa einen Flansch an der Magnetscheibe 11 umfassen und die Nockenscheibe 13 kann einen Auslegearm umfassen, welcher bei Drehung um die Antriebsachse AW gegen diesen Flansch der Magnetscheibe drücken kann.

Zwischen der Klinkenscheibe 9 und der Einlegefederscheibe 12 kann auf ähnliche Weise die Einlegefeder 16 befestigt sein, etwa durch Bolzen an den beiden Scheiben und sich um die Antriebswelle AW herumwinden, einfach oder mehrmals. In der Neutralposition nP kann die Einlegefeder 16 vorgespannt sein und eine Kraft in Drehrichtung, etwa gegen der Uhrzeigersinn, auf die Drehmechanik 1 auslösen. Die Vorspannung kann dabei zwischen Klinkenscheibe 9 und Einlegefederscheibe 12 wirken. Die Einlegefederscheibe 12 kann sich an einem zweiten Anschlag A2, welcher als ein Flansch an der Magnetscheibe 11 ausgeformt sein kann, auf die Magnetscheibe 11 auch abstützen und ein Drehmoment auf die Magnetscheibe 11 ausüben, wobei sich die Magnetscheibe auf die Rastklinke 17 in deren eingerasteten Zustand an einem Vorsprung der Magnetscheibe abstützen kann. Somit ist vor dem Einlegen der Sperrwirkung ein Kraftschluss in der Drehmechanik 1 durch die eingerastete Rastklinke 17 geschlossen. Der Permanentmagnet PM kann einen Nordpol und einen Südpol N-S umfassen.

Der zweite Aktor F2 kann in dem Gehäuse 6 des Fahrzeuggetriebes befestigt sein und über einen Stecker 20 mit der Steuereinrichtung SE verbunden sein.

Somit kann ein Moment der Klinkenfeder 3 über die Nockenscheibe 13 und die Nockenfeder 15 auf die Magnetscheibe 11 und über den zweiten Anschlag A2 auf die Einlegefeder 16 und in weiterer Folge auf den ersten gehäusefesten Anschlag A5 übertragen werden, die Drehmechanik sich bei vorgespannter Einlegefeder 16 in Neutralposition nP also auf den ersten gehäusefesten Anschlag A5 abstützen und so stabil in Position gehalten werden, was der Positionssensor PS auch so erfassen kann.

Die Figuren 1 bis 10 zeigen aufeinanderfolgende Schritte.

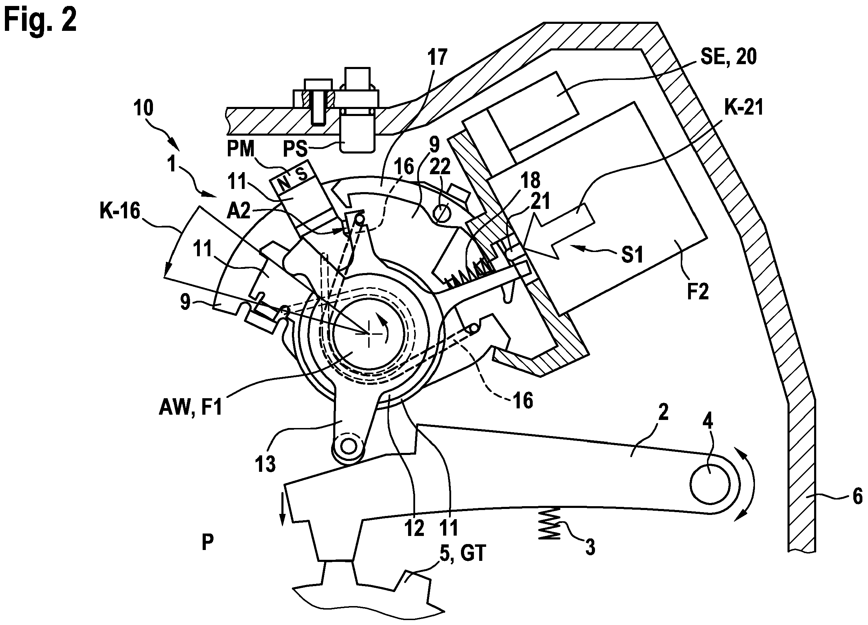

Fig. 2 zeigt eine schematische Darstellung einer Drehmechanik in einer Parksperreneinrichtung gemäß einem Ausführungsbeispiel der vorliegenden Erfindung während eines weiteren Betriebsschrittes.

Um die Sperrklinke 2 und die Drehmechanik 1 aus der Neutralposition nP, wie in der Fig. 1 gezeigt, in die Sperrposition P zu überführen, kann der zweite Aktor F2 über seinen Stecker 20 vom Steuergerät SE bestromt werden, wobei dann über den Ankerpin 21 eine Kraft K-21 auf die Rastklinke 17 ausgeübt werden kann und der Rastmechanismus aus der Magnetscheibe 11 aushaken. Diese Kraft dreht die Rastklinke 17 um den Bolzen 22 und durch die Drehbewegung gibt die Rastklinke die Magnetscheibe 11 frei, die Klinkenscheibe 9 muss sich dabei nicht bewegen. Durch die vorgespannte Einlegefeder 16 und über den zweiten Anschlag A2 kann nun die Magnetscheibe 11 gedreht werden (etwa gegen den Uhrzeigersinn) und die Nockenscheibe 13 (nach links) durch die Nockenfederspannung mitdrehen und die Nockenscheibe 13 drückt die Sperrklinke 2 nach unten in das Zahradgetriebe hinein. Die Einlegefeder 16 und die Nockenfeder 15 können um die Antriebswelle gewunden sein und direkt an dieser anliegen.

Wenn nun ein Zahn der Sperrklinke 2 nicht in eine Lücke des Parksperrenrads 5 trifft, sondern auf einen Zahn, so kann die Bewegung Sperrklinke 2 und damit der Nockenscheibe 13 auch gestoppt werden. Durch eine höhere Kraft K-16 der Einlegefeder 16 kann die Magnetscheibe 11 aber trotzdem in Ihre Sperrposition P gedreht werden und gleichzeitig wird die Nockenfeder 15 gespannt. Der Permanentmagnet PM kann dabei, wie die Magnetscheibe 11, seine Sperrposition P erreicht haben und somit gibt der Positionssensor PS das Signal P an das Steuergerät SE. Bewegt sich das Fahrzeug minimal, so dreht sich das Parksperrenrad 5. Durch die gespannte Nockenfeder 15 wird die Nockenscheibe und die Sperrklinke 2 gegen die Klinkenfeder 3 in die nächste Zahnlücke des Parksperrenrads 5 eingedrückt. Da die Position des Permanentmagneten PM unverändert bleiben kann, wird weiterhin Signal P an das Steuergerät gemeldet.

Für den Fall, dass die Steuereinrichtung SE einen elektrischen Fehler des zweiten Aktors F2 feststellt, etwa durch Kabelbruch, Kurzschluss in der Wicklung oder Weiteres, so kann alternativ das Einlegen der Parksperre auch durch den ersten Aktor F1erfolgen. Dieser kann den Rastmechanismus auslösen oder vorzugsweise mit der Antriebswelle die Klinkenscheibe 9, die Magnetscheibe 11 und die Nockenscheibe 13 drehen und die Sperrklinke 2 hinunterdrücken. Sollte wieder eine Zahn-zu-Zahn Stellung auftreten, wird auch hier die Nockenfeder 15 gespannt und legt nach kurzer Fahrzeugbewegung die Sperrklinke 2 ein, oder es erfolgt bei einer Zahn-Lücke Stellung sofort das Einlegen der Parksperre. Die Redundanz für das Einlegen ist so gegeben.

Da nun die Einlegefeder 16 nach dem Erreichen der Sperrposition P entspannt ist, muss vor dem nächsten Einlegen die Einlegefeder 16 wieder gespannt werden, wie in den folgenden Figuren gezeigt. Das Spannen der Einlegefeder kann vorteilhaft in der Stellung P erfolgen, also es kann sofort nach dem Einlegen der Parksperre die Routine Federspannen erfolgen.

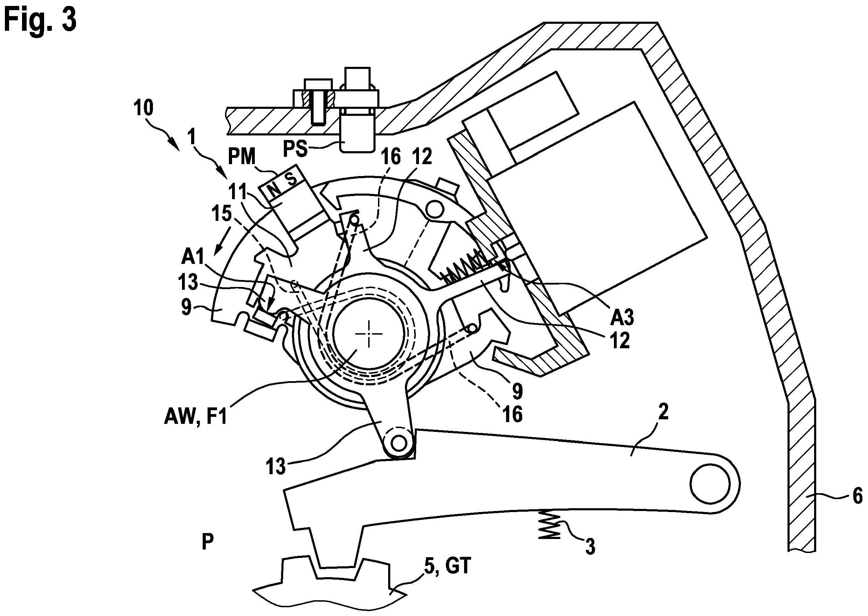

Fig. 3 zeigt eine schematische Darstellung einer Drehmechanik in einer Parksperreneinrichtung gemäß einem Ausführungsbeispiel der vorliegenden Erfindung während eines weiteren Betriebsschrittes.

Die Fig. 3 zeigt die Drehmechanik 1 der Fig. 1 und Fig. 2 in einem ersten Schritt der Spannroutine. Der erste Aktor kann über die Antriebswelle AW die Klinkenscheibe 9 (gegen den Uhrzeigersinn) drehen und über die Einlegefeder 16 kann dann die Einlegefederscheibe 12 mitgedreht werden, bis diese den zweiten gehäusefesten Anschlag A3 erreicht, womit ein linker Schenkel der Einlegefeder 16 somit blockiert werden kann.

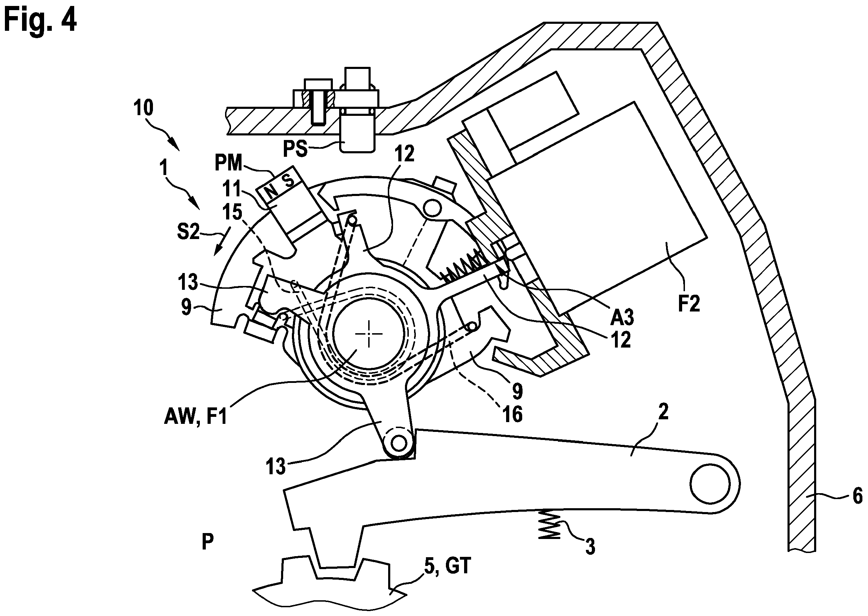

Fig. 4 zeigt eine schematische Darstellung einer Drehmechanik in einer Parksperreneinrichtung gemäß einem Ausführungsbeispiel der vorliegenden Erfindung während eines weiteren Betriebsschrittes.

Anschließend zur Drehlage der Fig. 3 kann bei Erreichen des zweiten gehäusefesten Anschlags A3 der erste Aktor F1 die Klinkenscheibe 9 weiter (in die gleiche Richtung wie bisher, also hier gegen den Uhrzeigersinn) drehen (weiteres Spannen).

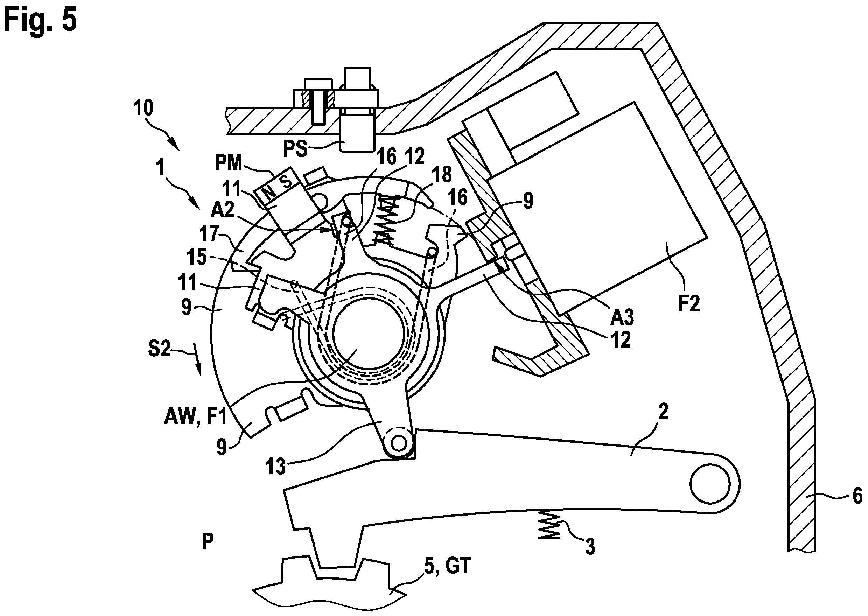

Fig. 5 zeigt eine schematische Darstellung einer Drehmechanik in einer Parksperreneinrichtung gemäß einem Ausführungsbeispiel der vorliegenden Erfindung während eines weiteren Betriebsschrittes.

Nach dem weiteren Drehen aus der Fig. 4 kann danach die Einlegefeder 16 noch weiter gespannt werden und die Rastklinke 17 wieder in die Magnetscheibe 11 eingreifen, die Rastfeder 18 also die Rastklinke 17 wieder zum Einrasten drücken. Die Einlegefeder 16 ist jetzt gespannt und die Verrastung wiederhergestellt. Allerdings gibt es nicht notwendigerweise eine Information, ob dieser Zustand erreicht wurde. Daher kann der erste Aktor die Klinkenscheibe 9 weiterdrehen (gegen den Uhrzeigersinn), etwa in die gleiche Richtung.

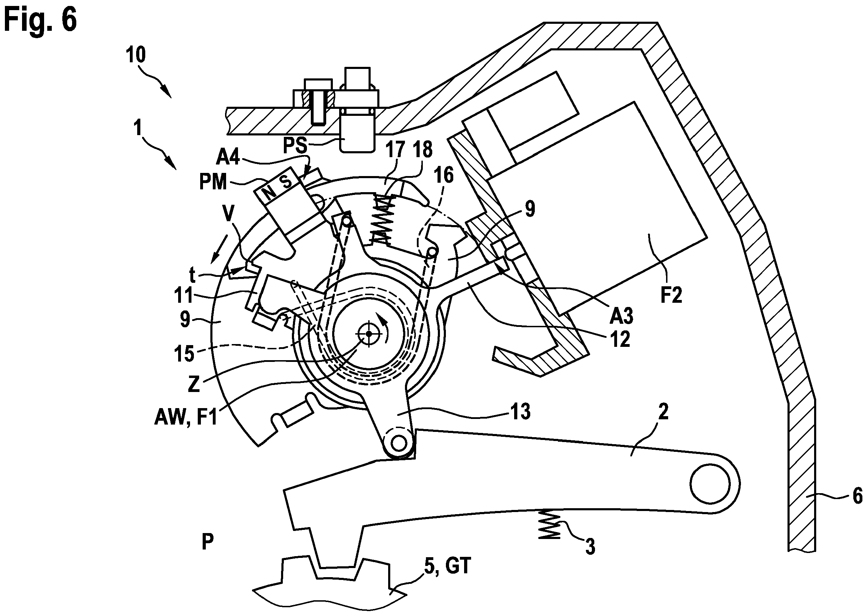

Fig. 6 zeigt eine schematische Darstellung einer Drehmechanik in einer Parksperreneinrichtung gemäß einem Ausführungsbeispiel der vorliegenden Erfindung während eines weiteren Betriebsschrittes.

In der Fig. 6 ist das Weiterdrehen der Klinkenscheibe 9 gezeigt (in Spannrichtung gegen den Uhrzeigersinn), wie in der Fig. 5 bereits erwähnt. Dabei kann ein Spiel t zwischen eingerasteter Rastklinke 17 und dem Vorsprung V an der Magnetscheibe 11 entstehen. Es entsteht ein Spiel t in der Verrastung, aber durch die Rastfeder 18 bleibt die Rastklinke 17 in ihrer Position P. Die Klinkenscheibe 9 kann nun die Magnetscheibe 11 am dritten Anschlag A4 erreichen, welcher an der Magnetscheibe 11 ausgeformt sein kann. Der dritte Anschlag A4 kann nun eine weitere Kraft auf die Magnetscheibe 11 in Drehrichtung auswirken (Pfeildarstellung an A4) und diese mitdrehen.

In der Fig. 6 wird weiterhin eine Ausdehnungsrichtung z an der Antriebswelle AW gezeigt. Entlang dieser können die Scheiben und Federn in unterschiedlichen Niveaus, höhenversetzt, angeordnet sein. Diese genaue Anordnung entlang z kann je nach Auslegung und Bauvorgabe anders gewählt sein.

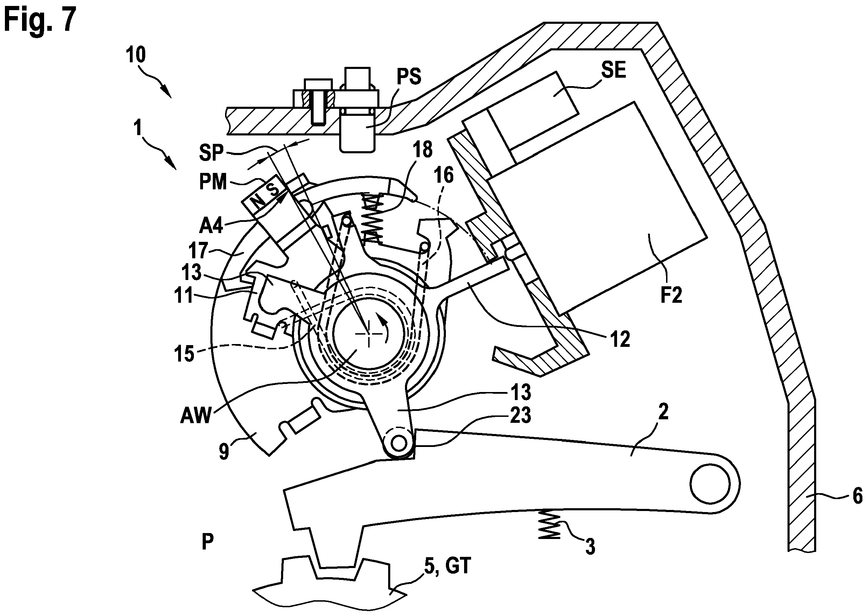

Fig. 7 zeigt eine schematische Darstellung einer Drehmechanik in einer Parksperreneinrichtung gemäß einem Ausführungsbeispiel der vorliegenden Erfindung während eines weiteren Betriebsschrittes.

Nachdem Erreichend des dritten Anschlags A4 gemäß der Fig. 6 kann nun die Klinkenscheibe 9 die Magnetscheibe 11 in Drehrichtung mitnehmen, die Einlegefeder 16 nun weiter spannen, bis eine Spannposition SP erreicht werden kann.

Dabei verändert der Permanentmagnet PM weiter seine Position, die Sperrklinke 2 bleibt in Position P. Dieses Signal kann jetzt in der Steuereinrichtung SE als Signal "Feder gespannt" erkannt werden, welche sich in der Spannposition befinden kann. Der zusätzliche Drehwinkel zur Erkennung "Feder gespannt" führt auch zu einem Weiterspannen der Nockenfeder 15, da der Nocken 13 an der Sperrklinke 2 am Sperrklinkenanschlag 23 in der Sperrstellung P blockiert sein kann.

Nach dem Signal "Feder gespannt" kann dieser Wert in der Steuereinrichtung gespeichert werden und die Steuereinrichtung kann abgeschaltet werden.

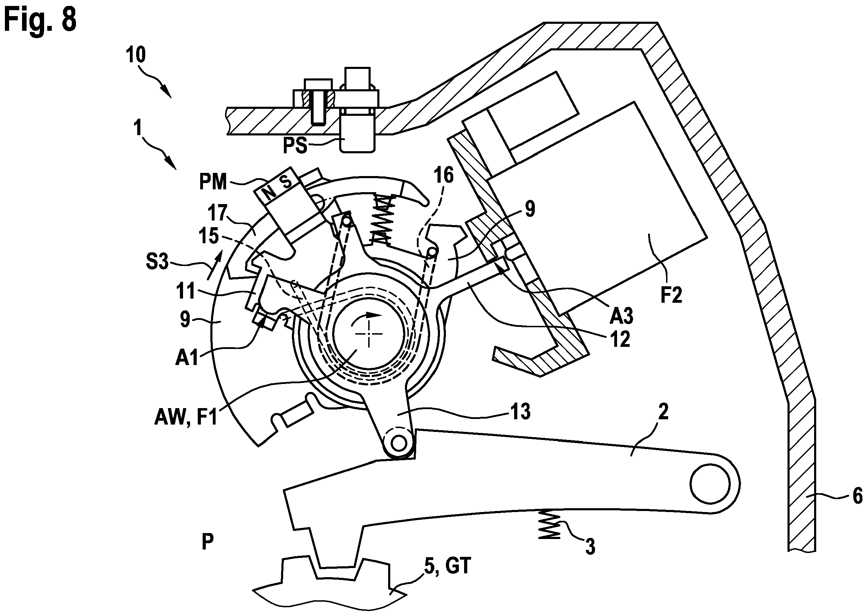

Fig. 8 zeigt eine schematische Darstellung einer Drehmechanik in einer Parksperreneinrichtung gemäß einem Ausführungsbeispiel der vorliegenden Erfindung während eines weiteren Betriebsschrittes.

In weiterer Folge zur Position der Fig. 7, etwa auch bei einem Neustart des Fahrzeugs, kann wieder ein Drehen in die Gegenrichtung (also nun im Uhrzeigersinn) zur Spannbewegung der Figuren 1 bis 7 erfolgen. Die Steuereinrichtung kann dabei den Status "Feder gespannt" im Speicher lesen und kann anschließend den ersten Aktor F1 für eine Bewegung der Drehmechanik in Drehrichtung gegen die Spannbewegung (beispielsweise rechts oder im Uhrzeigersinn) ansteuern.

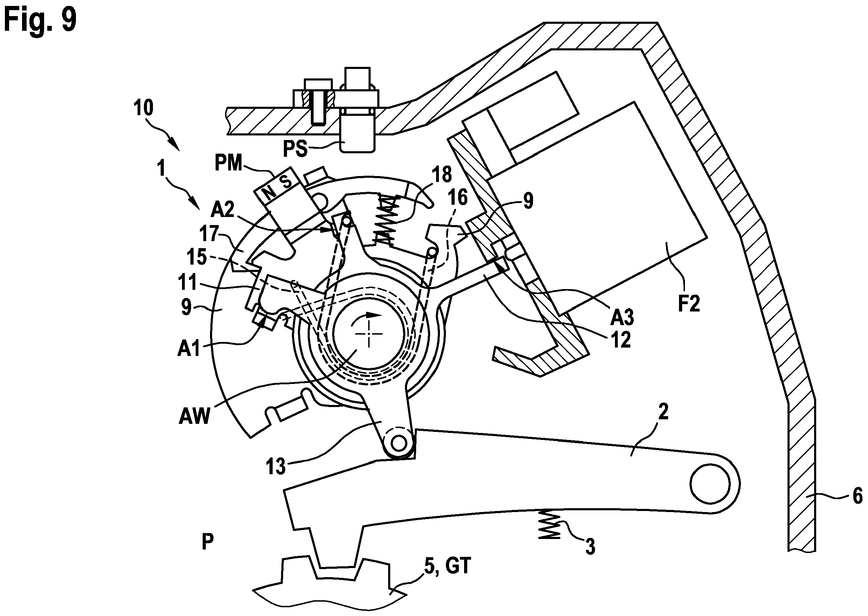

Der erste Aktor F1 dreht somit etwa die Antriebswelle AW mit der Klinkenscheibe 9 zurück. Dabei kann zuerst der zweite Anschlag A2 erreicht werden, die Nockenfeder 15 kann dabei wieder ihre normale Vorspannung annehmen, wie in Fig. 9. Der Positionssensor PS kann das Rückdrehen und die Position P registrieren.

Fig. 9 zeigt eine schematische Darstellung einer Drehmechanik in einer Parksperreneinrichtung gemäß einem Ausführungsbeispiel der vorliegenden Erfindung während eines weiteren Betriebsschrittes.

Nach der Position der Fig. 8 kann im weiteren Drehen nach dem Uhrzeigersinn in der Fig. 9 die Rastklinke 17 der Klinkenscheibe 9 wieder die Magnetscheibe 11 erreichen und eine Verrastung dieser Scheiben festhalten, wobei die Magnetscheibe 11 auf den zweiten Anschlag A2 mit der Einlegescheibe 12 treffen kann.

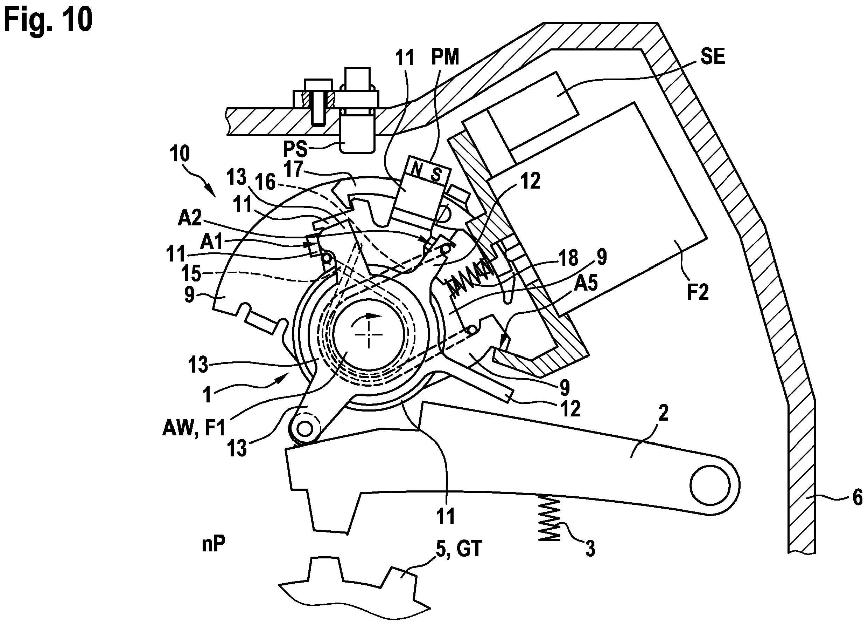

Fig. 10 zeigt eine schematische Darstellung einer Drehmechanik in einer Parksperreneinrichtung gemäß einem Ausführungsbeispiel der vorliegenden Erfindung während eines weiteren Betriebsschrittes.

In einem Folgeschritt zur Fig. 9 kann nach einem weiteren Drehen der Drehmechanik 1 mit Übertragung des Drehmoments über den zweiten Anschlag A2 im Uhrzeigersinn die Drehmechanik mit der Klinkenscheibe 9 wieder auf den ersten Gehäuseanschlag A5 treffen. Da die Rastklinke 17 durch ihre Verrastung die Magnetscheibe 11 und diese über den ersten Anschlag A1 die Nockenscheibe 13 mitnimmt, kann die Nockenscheibe 13 an der Sperrklinke 2 nach links, oder zumindest mit deren Nockenarm die Sperrklinke 2 lösend, gedreht oder bewegt werden und die Neutralposition nP erreicht werden, wobei die Parksperre ausgelegt wird. Diese Position kann durch die Stellung des
Permanentmagneten PM vom Positionssensor PS erfasst werden und an die Steuereinrichtung SE weitergegeben werden und gespeichert werden. Das Fahrzeug kann danach losfahren.

Die Anordnung der Scheiben in der Drehmechanik aus den Figuren 1 bis 10 ist nur eine beispielhafte Ausführungsform, diese Scheiben können relativ zueinander auch anders angeordnet werden und die jeweiligen Anschläge auch anders auf die Scheiben wirken, solange das Grunddrehkonzept zur Kraftübertragung der Spannwirkung und zum Einlegen und Auslegen der Sperrwirkung nach den Ansprüchen erzielt werden kann. Die Anordnung der Scheiben, Anschläge und Federn kann im Detail anders gewählt werden, je nach Bauraum, Montagegründen oder anderen Gründen.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Parksperreneinrichtung (10) für ein Fahrzeuggetriebe (GT) umfassend:
- eine Antriebswelle (AW) und einen ersten Aktor (F1), durch welchen die Antriebswelle (AW) drehbar ist;
- eine Sperrklinke (2), welche sperrend in das Fahrzeuggetriebe (GT) einrastbar ist;
- eine Drehmechanik (1), welche mit der Antriebswelle (AW) verbunden ist und einen Rastmechanismus (17, 18), eine Einlegefeder (16) und einen Permanentmagnet (PM) umfasst, wobei die Sperrklinke (2) und die Drehmechanik (1) mit dem Permanentmagnet (PM) zwischen einer Sperrposition (P) und einer Neutralposition (nP) für das Fahrzeuggetriebe (GT) bewegbar sind, wobei die Drehmechanik (1) über die Einlegefeder (16) vorspannbar ist und dadurch die Neutralposition (nP) einnehmbar ist; wobei die Parksperreneinrichtung (10) weiterhin umfasst:
- einen zweiten Aktor (F2), durch welchen bei vorgespannter Einlegefeder (16) der Rastmechanismus auslösbar ist und dadurch die Sperrposition (P) durch eine Kraftwirkung der Einlegefeder (16) auf die Drehmechanik (1) einlegbar ist, wobei durch den eingelegten Rastmechanismus bei vorgespannter Einlegefeder (16) die Drehmechanik (1) in der Neutralposition (nP) haltbar ist, und wobei der erste Aktor weiterhin dazu eingerichtet ist, die Drehmechanik (1) zu bewegen und dadurch die Einlegefeder (16) wieder zu spannen und danach die Drehmechanik (1) in die Neutralposition (nP) zu bewegen;
- einen Positionssensor (PS), welcher in einem Erfassungsbereich (EB) des Permanentmagneten (PM) angeordnet ist, wobei der Positionssensor (PS) dazu eingerichtet ist, eine Bewegung des Permanentmagneten (PM) relativ zum Positionssensor (PS) zu ermitteln und dadurch zu erfassen ob sich durch die Drehmechanik (1) die Sperrklinke (2) in der Sperrposition (P) oder in der Neutralposition (nP) befindet; und
- eine Steuereinrichtung (SE), welche mit dem Positionssensor (PS) und mit dem ersten Aktor (F1) und mit dem zweiten Aktor (F2) verbunden ist, und welche dazu eingerichtet ist, einen Betrieb des ersten Aktors (F1) und/oder des zweiten Aktors (F2) zu steuern, **dadurch gekennzeichnet, dass**
die Drehmechanik (1) weiterhin umfasst:
- eine Klinkenscheibe (9), welche drehfest mit der Antriebswelle (AW) verbunden ist,
- eine Magnetscheibe (11) mit dem Permanentmagnet (PM),
- eine Einlegefederscheibe (12), welche mit der Einlegefeder (16) verbunden ist, und
- eine Nockenscheibe (13), wobei die Magnetscheibe (11), die Einlegefederscheibe (12) und die Nockenscheibe (13) drehbar auf der Antriebswelle (AW) angeordnet und gelagert sind, wobei die Magnetscheibe (11), die Einlegefederscheibe (12), die Nockenscheibe (13) und/oder die Klinkenscheibe (9) Anschlagsbereiche (A1, A2, A4) umfassen, über welche ein Drehmoment über die Drehmechanik (1) übertragbar ist, wobei die Sperrklinke (2) an die Nockenscheibe (13) anliegt und abhängig von einer Position der Nockenscheibe (13) die Sperrklinke (2) sich in der Sperrposition (P) oder in der Neutralposition (nP) für das Fahrzeuggetriebe (GT) befindet.

2. Parksperreneinrichtung (10) nach Anspruch 1, bei welcher die Drehmechanik (1) eine Nockenfeder (15) umfasst, über welche das Drehmoment innerhalb der Drehmechanik (1) übertragbar ist.

3. Parksperreneinrichtung (10) nach einem der Ansprüche 1 bis 2, bei welcher der Positionssensor (PS) dazu eingerichtet ist, eine Magnetfeldkennlinie während der Bewegung des Permanentmagneten (PM) zu erfassen.

4. Parksperreneinrichtung (10) nach einem der Ansprüche 1 bis 3, bei welcher der erste Aktor (F1) einen Elektromotor und der zweite Aktor einen Hubmagnet umfasst.

5. Parksperreneinrichtung (10) nach einem der Ansprüche 1 bis 4, bei welcher die Drehmechanik (1) dazu ausgelegt ist, mit zumindest einem weiteren Anschlagsbereich (A3, A5) eines Gehäuses (6) des Fahrzeuggetriebes (GT) einzugreifen um ein Drehmoment über die Drehmechanik (1) zu übertragen.

6. Parksperreneinrichtung (10) nach einem der Ansprüche 1 bis 5, bei welcher die Steuereinrichtung (SE) dazu eingerichtet ist, eine Fehlerfunktion des zweiten Aktors (F2) zu erkennen und den ersten Aktor (F1) zum Drehen der Antriebswelle (AW) und damit zum Einlegen der Sperrposition (P) anzusteuern.

7. Parksperreneinrichtung (10) nach einem der Ansprüche 1 bis 6, bei welcher die Drehmechanik (1) derart ausgelegt ist, dass beim Bewegen der Drehmechanik (1) zum erneuten Spannen der Einlegefeder (16) und einem nachträglichen Bewegen der Drehmechanik (1) in die Neutralposition (nP) die Sperrklinke (2) bis zum Erreichen der Neutralposition (nP) eine Sperrwirkung aufrechterhält.

8. Parksperreneinrichtung (10) nach einem der Ansprüche 1 bis 7, welche eine Notstromversorgung umfasst, mit welcher der erste Aktor und/oder der zweite Aktor verbunden ist.

9. Verfahren zum Betreiben einer Parksperreneinrichtung (10) nach einem der Ansprüche 1 bis 8 umfassend die Schritte:
- Auslösen (S1) des Rastmechanismus durch den zweiten Aktor (F2) und dadurch Einlegen der Sperrposition (P) durch eine Kraftwirkung der Einlegefeder (16) oder Drehen der Antriebswelle (AW) durch den ersten Aktor und dadurch Einlegen der Sperrposition (P) durch den ersten Aktor (F1) bei einer Fehlfunktion des zweiten Aktors (F2);
- erneutes Spannen (S2) der Einlegefeder (16) durch ein Drehen der Drehmechanik (1) durch den ersten Aktor (F1) während der Sperrposition (P) und Einrasten des Rastmechanismus;
- Bewegen (S3) der Drehmechanik (1) zurück in die Neutralposition (nP) durch den ersten Aktor (F1), wobei der Positionssensor (PS) eine Bewegung des Permanentmagneten (PM) relativ zum Positionssensor (PS) ermittelt und erfasst, ob sich durch die Drehmechanik (1) die Sperrklinke (2) in der Sperrposition (P) oder in der Neutralposition (nP) befindet.

10. Verfahren nach Anspruch 9, bei welchem der zweite Aktor einen Hub bewegt und damit den Rastmechanismus löst und ein Drehen der Drehmechanik (1) durch die Kraftwirkung der vorgespannten Einlegefeder (16) freigibt und dadurch die Sperrposition (P) eingelegt wird.

11. Verfahren nach einem der Ansprüche 9 oder 10, bei welchem zum Spannen der Einlegefeder (16) die Drehmechanik (1) bis zu einer Spannposition (SP) gedreht wird, welche von dem Positionssensor (PS) erkannt wird.

## Claims

1. Parking lock device (10) for a vehicle transmission (GT), comprising:
- a drive shaft (AW) and a first actuator (F1), by which the drive shaft (AW) can be rotated;
- a locking pawl (2), which can be latched into the vehicle transmission (GT) with a locking effect;
- a rotary mechanism (1), which is connected to the drive shaft (AW) and comprises a latching mechanism (17, 18), an engagement spring (16) and a permanent magnet (PM), wherein the locking pawl (2) and the rotary mechanism (1) can be moved by means of the permanent magnet (PM) between a locking position (P) and a neutral position (nP) for the vehicle transmission (GT), wherein the rotary mechanism (1) can be preloaded by means of the engagement spring (16) and, as a result, the neutral position (nP) can be adopted; wherein the parking lock device (10) further comprises:
- a second actuator (F2), by which, when the engagement spring (16) is preloaded, the latching mechanism can be triggered and, as a result, the locking position (P) can be selected by a force effect of the engagement spring (16) on the rotary mechanism (1), wherein, when the engagement spring (16) is preloaded, the rotary mechanism (1) can be held in the neutral position (nP) by the engaged latching mechanism, and wherein the first actuator is furthermore designed to move the rotary mechanism (1) and thereby load the engagement spring (16) again and, after that, to move the rotary mechanism (1) into the neutral position (nP);
- a position sensor (PS), which is arranged in a detection region (EB) of the permanent magnet (PM), wherein the position sensor (PS) is configured to detect a movement of the permanent magnet (PM) relative to the position sensor (PS) and thereby to ascertain whether the locking pawl (2) is in the locking position (P) or in the neutral position (nP) on account of the rotary mechanism (1); and
- a control device (SE), which is connected to the position sensor (PS) and to the first actuator (F1) and to the second actuator (F2), and which is configured to control operation of the first actuator (F1) and/or of the second actuator (F2), **characterized in that** the rotary mechanism (1) furthermore comprises:
- a ratchet disk (9), which is connected to the drive shaft (AW) for conjoint rotation therewith,
- a magnetic disk (11) with the permanent magnet (PM),
- an engagement spring disk (12), which is connected to the engagement spring (16), and
- a cam disk (13), wherein the magnetic disk (11), the engagement spring disk (12) and the cam disk (13) are arranged and supported rotatably on the drive shaft (AW), wherein the magnetic disk (11), the engagement spring disk (12), the cam disk (13) and/or the ratchet disk (9) comprise stop regions (Al, A2, A4), by means of which a torque can be transmitted via the rotary mechanism (1), wherein the locking pawl (2) rests on the cam disk (13) and, depending on a position of the cam disk (13), the locking pawl (2) is in the locking position (P) or in the neutral position (nP) for the vehicle transmission (GT).

2. Parking lock device (10) according to Claim 1, in which the rotary mechanism (1) comprises a cam spring (15), by means of which the torque can be transmitted within the rotary mechanism (1).

3. Parking lock device (10) according to one of Claims 1 to 2, in which the position sensor (PS) is configured to detect a magnetic field characteristic during the movement of the permanent magnet (PM).

4. Parking lock device (10) according to one of Claims 1 to 3, in which the first actuator (F1) comprises an electric motor and the second actuator comprises a solenoid.

5. Parking lock device (10) according to one of Claims 1 to 4, in which the rotary mechanism (1) is designed to engage with at least one further stop region (A3, A5) of a housing (6) of the vehicle transmission (GT) in order to transmit a torque via the rotary mechanism (1).

6. Parking lock device (10) according to one of Claims 1 to 5, in which the control device (SE) is configured to detect an error function of the second actuator (F2) and to actuate the first actuator (F1) to rotate the drive shaft (AW) and thus to select the locking position (P) .

7. Parking lock device (10) according to one of Claims 1 to 6, in which the rotary mechanism (1) is designed in such a way that, when the rotary mechanism (1) is moved in order to load the engagement spring (16) again and the rotary mechanism (1) is subsequently moved into the neutral position (nP), the locking pawl (2) maintains a locking effect until the neutral position (nP) is reached.

8. Parking lock device (10) according to one of Claims 1 to 7, which comprises an emergency power supply, to which the first actuator and/or the second actuator are/is connected.

9. Method for operating a parking lock device (10) according to one of Claims 1 to 8, comprising the steps of:
- triggering (S1) of the latching mechanism by the second actuator (F2) and thereby engagement of the locking position (P) by a force effect of the engagement spring (16) or rotation of the drive shaft (AW) by the first actuator and thereby engagement of the locking position (P) by the first actuator (F1) in the event of a malfunction of the second actuator (F2);
- renewed loading (S2) of the engagement spring (16) by rotation of the rotary mechanism (1) by the first actuator (F1) during the locking position (P) and engagement of the latching mechanism;
- moving (S3) the rotary mechanism (1) back into the neutral position (nP) by the first actuator (F1), wherein the position sensor (PS) detects a movement of the permanent magnet (PM) relative to the position sensor (PS) and ascertains whether, on account of the rotary mechanism (1), the locking pawl (2) is in the locking position (P) or in
the neutral position (nP).

10. Method according to Claim 9, in which the second actuator performs a stroke and thus releases the latching mechanism and enables rotation of the rotary mechanism (1) by the force effect of the preloaded engagement spring (16) and, as a result, the locking position (P) is engaged.

11. Method according to one of Claims 9 or 10, in which, in order to load the engagement spring (16), the rotary mechanism (1) is rotated as far as a loading position (SP), which is detected by the position sensor (PS).

## Revendications

1. Dispositif de frein de stationnement (10) pour une transmission de véhicule (GT) comprenant :
- un arbre d'entraînement (AW) et un premier actionneur (F1) par lequel l'arbre d'entraînement (AW) peut tourner ;
- un cliquet de blocage (2) qui peut être encliqueté de manière bloquante dans la transmission de véhicule (GT) ;
- un mécanisme rotatif (1) relié à l'arbre d'entraînement (AW) et comprenant un mécanisme d'encliquetage (17, 18), un ressort d'insertion (16) et un aimant permanent (PM), le cliquet de blocage (2) et le mécanisme rotatif (1) pouvant être déplacés avec l'aimant permanent (PM) entre une position de blocage (P) et une position neutre (nP) pour la transmission de véhicule (GT), le mécanisme rotatif (1) pouvant être précontraint par l'intermédiaire du ressort d'insertion (16) et la position neutre (nP) pouvant ainsi être adoptée ; le dispositif de frein de stationnement (10) comprenant en outre :
- un deuxième actionneur (F2) par lequel, lorsque le ressort d'insertion (16) est précontraint, le mécanisme d'encliquetage peut être déclenché et ainsi la position de blocage (P) peut être engagée par une action de force du ressort d'insertion (16) sur le mécanisme rotatif (1), le mécanisme d'encliquetage engagé permettant de maintenir le mécanisme rotatif (1) dans la position neutre (nP) lorsque le ressort d'insertion (16) est précontraint, et le premier actionneur étant en outre adapté pour déplacer le mécanisme rotatif (1) et ainsi contraindre de nouveau le ressort d'insertion (16) et ensuite déplacer le mécanisme rotatif (1) dans la position neutre (nP) ;
un capteur de position (PS) qui est agencé dans une zone de détection (EB) de l'aimant permanent (PM), le capteur de position (PS) étant adapté pour déterminer un déplacement de l'aimant permanent (PM) par rapport au capteur de position (PS) et pour détecter ainsi si le cliquet de blocage (2) se trouve dans la position de blocage (P) ou dans la position neutre (nP) par le mécanisme rotatif (1) ; et
- un dispositif de commande (SE) qui est relié au capteur de position (PS) et au premier actionneur (F1) et au deuxième actionneur (F2), et qui est adapté pour commander un fonctionnement du premier actionneur (F1) et/ou du deuxième actionneur (F2), **caractérisé en ce que** le mécanisme rotatif (1) comprend en outre :
- un disque à cliquet (9) qui est relié à l'arbre d'entraînement (AW) de manière solidaire en rotation,
- un disque à aimant (11) avec l'aimant permanent (PM),
- un disque à ressort d'insertion (12), qui est relié au ressort d'insertion (16), et
- un disque à came (13), le disque à aimant (11), le disque à ressort d'insertion (12) et le disque à came (13) étant agencés et supportés de manière rotative sur l'arbre d'entraînement (AW), le disque à aimant (11), le disque à ressort d'insertion (12), le disque à came (13) et/ou le disque à cliquet (9) comprenant des zones de butée (A1, A2, A4), par l'intermédiaire desquelles un couple de rotation peut être transmis par l'intermédiaire du mécanisme rotatif (1), le cliquet de blocage (2) s'appliquant contre le disque à came (13) et, en fonction d'une position du disque à came (13), le cliquet de blocage (2) se trouvant dans la position de blocage (P) ou dans la position neutre (nP) pour la transmission de véhicule (GT).

2. Dispositif de frein de stationnement (10) selon la revendication 1, dans lequel le mécanisme rotatif (1) comprend un ressort de came (15) par l'intermédiaire duquel le couple de rotation peut être transmis à l'intérieur du mécanisme rotatif (1).

3. Dispositif de frein de stationnement (10) selon l'une quelconque des revendications 1 à 2, dans lequel le capteur de position (PS) est adapté pour détecter une courbe caractéristique de champ magnétique pendant le déplacement de l'aimant permanent (PM).

4. Dispositif de frein de stationnement (10) selon l'une quelconque des revendications 1 à 3, dans lequel le premier actionneur (F1) comprend un moteur électrique et le deuxième actionneur comprend un aimant de levage.

5. Dispositif de frein de stationnement (10) selon l'une quelconque des revendications 1 à 4, dans lequel le mécanisme rotatif (1) est conçu pour venir en prise avec au moins une autre zone de butée (A3, A5) d'un boîtier (6) de la transmission de véhicule (GT) afin de transmettre un couple de rotation par l'intermédiaire du mécanisme rotatif (1).

6. Dispositif de frein de stationnement (10) selon l'une quelconque des revendications 1 à 5, dans lequel le dispositif de commande (SE) est adapté pour identifier un fonctionnement défectueux du deuxième actionneur (F2) et pour commander le premier actionneur (F1) pour faire tourner l'arbre d'entraînement (AW) et ainsi engager la position de blocage (P).

7. Dispositif de frein de stationnement (10) selon l'une quelconque des revendications 1 à 6, dans lequel le mécanisme rotatif (1) est conçu de telle sorte que, lors du déplacement du mécanisme rotatif(1) pour contraindre à nouveau le ressort d'insertion (16) et d'un déplacement ultérieur du mécanisme rotatif (1) vers la position neutre (nP), le cliquet de blocage (2) maintient un effet de blocage jusqu'à ce que la position neutre (nP) soit atteinte.

8. Dispositif de frein de stationnement (10) selon l'une quelconque des revendications 1 à 7, qui comprend une alimentation électrique de secours à laquelle le premier actionneur et/ou le deuxième actionneur sont reliés.

9. Procédé pour faire fonctionner un dispositif de frein de stationnement (10) selon l'une quelconque des revendications 1 à 8, comprenant les étapes suivantes :
- le déclenchement (S1) du mécanisme d'encliquetage par le deuxième actionneur (F2) et ainsi l'engagement de la position de blocage (P) par une action de force du ressort d'insertion (16) ou la rotation de l'arbre d'entraînement (AW) par le premier actionneur et ainsi l'engagement de la position de blocage (P) par le premier actionneur (F1) en cas de fonctionnement défectueux du deuxième actionneur (F2) ;
- la nouvelle contrainte (S2) du ressort d'insertion (16) par une rotation du mécanisme rotatif (1) par le premier actionneur (F1) pendant la position de blocage (P) et l'encliquetage du mécanisme d'encliquetage ;
- le déplacement (S3) du mécanisme rotatif (1) en retour dans la position neutre (nP) par le premier actionneur (F1), le capteur de position (PS) déterminant un déplacement de l'aimant permanent (PM) par rapport au capteur de position (PS) et détectant si le cliquet de blocage (2) se trouve dans la position de blocage (P) ou dans
la position neutre (nP) par le mécanisme rotatif (1).

10. Procédé selon la revendication 9, dans lequel le deuxième actionneur déplace une course et détache ainsi le mécanisme d'encliquetage et libère une rotation du mécanisme rotatif (1) par l'action de force du ressort d'insertion précontraint (16), et la position de blocage (P) est ainsi engagée.

11. Procédé selon l'une quelconque des revendications 9 ou 10, dans lequel, pour contraindre le ressort d'insertion (16), le mécanisme rotatif (1) est fait tourner jusqu'à une position de contrainte (SP) qui est identifiée par le capteur de position (PS).
